# EUROPEAN PATENT SPECIFICATION

(11) **EP 0 403 442 B1**
(45) Date of publication and mention of the grant of the patent: **12.01.1994**
(21) Application number: 90830173.2
(22) Date of filing: 23.04.1990
(51) Int. Cl.: A61C 19/00, A61L 2/00

(54) **A disinfection system, in particular for the handpieces of dental surgery apparatus**
Desinfektionssystem, insbesondere für zahnärztliche Handstücke
Système de désinfection, en particulier pour pièces à main dentaires

(30) Priority: 14.06.1989 IT 4009789
(43) Date of publication of application: 19.12.1990
(73) Proprietor: CATTANI S.P.A., I-43100 Parma (IT)
(72) Inventor: Bellelli, Ennio, I-43100 Parma (IT); Ravasini, Giuseppe, I-43100 Parma (IT)
(74) Representative: Lanzoni, Luciano

(56) References cited:
- EP-A- 0 173 876
- EP-A- 0 317 521
- EP-A- 0 345 228
- DE-C- 3 611 327
- FR-A- 2 627 086
- US-A- 4 752 444

## Description

The present invention relates to a disinfection system, in particular for the handpieces of dental surgery apparatus.

Dental surgery equipment comprises instrument handpieces to which a variety of attachments can be fitted; such instruments are used by dentists when carrying out treatment on patients, and thus are operated in close proximity to, or often, fully inside the oral cavity of the patient.

Each handpiece is connected to the apparatus by way of a respective pipeline through which pressurized fluid is supplied for the operation of power driven attachments; the same lines also carry disinfectant fluids serving to prevent the collection of germs inside the handpiece and thus safeguard the health of the patient.

Conventionally, the handpieces are disconnected from the apparatus periodically and placed in an autoclave so that a thorough sterilization can be effected; this is none too frequently accomplished, however, inasmuch as the procedure is somewhat lengthy, and tends in any case to be laborious.

The prior art teaches a device, described in DE-C-3611327 which comprises a container on which the handpieces are placed during their disinfection, which is obtained by means of passing a disinfecting fluid coming from a tank. The prior art also teaches, as shown in EP-A-0173876, the use of heating means for the sterilisation.

One object of the present invention is to overcome the drawback thus described by supplying a system such as will allow of effecting a full disinfection of handpieces, simply and swiftly.

A further object of the invention is to provide a system that can be integrated easily into existing dental surgery apparatus installations.

Among the advantages afforded by the system of the present invention is that it permits of utilizing an inexpensive and easy-to-use disinfectant for external treatment of the handpieces.

The stated objects, and others besides, are fully realized in a disinfection system as characterized in the appended claims; the system comprises as in DE-C-3611327 a container adapted to be positioned internally of the surgery apparatus pedestal, into which the handpieces can be placed without being disconnected from their fluid supply lines
and is characterised by the presence of a spray device that sprays disinfecting liquid internally of the container and on the outside of the handpieces.

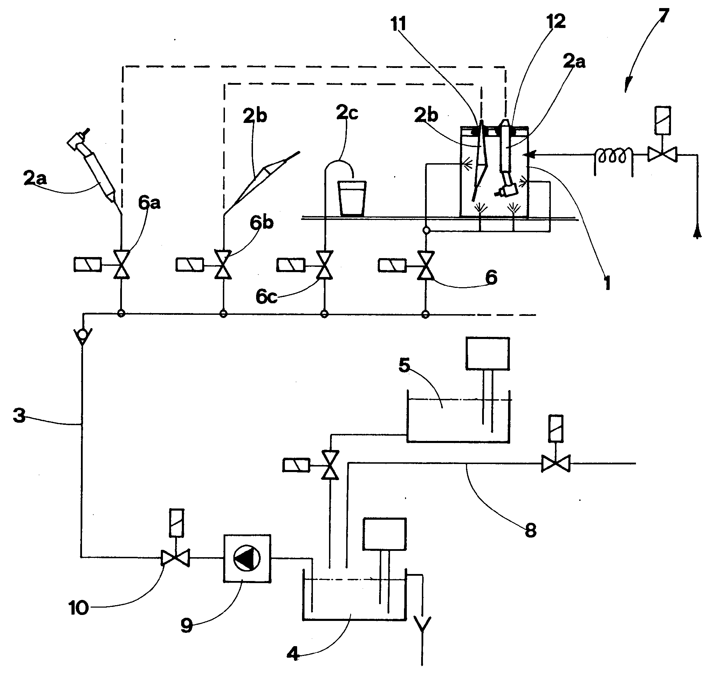

The invention will now be described in detail by way of example with the aid of the accompanying drawing, which provides a schematic illustration of the system.

The system disclosed comprises a tank 4 containing a disinfectant liquid that is a mixture of water, drawn preferably from the domestic main 8, and a disinfectant substance drawn from a further tank 5; in a preferred embodiment, the disinfectant would be chlorine, for reasons that will become apparent in due course. The mix tank 4 is isolated from the main 8 by a barrier of air in order that, whatever the operating conditions, its contents can never come into contact with the main 8; this ensures that no contamination of the water supply can occur in the event, however unlikely, of such contact occurring. The air barrier is created in practice simply by positioning the water main outlet at a given distance above the surface of the liquid occupying the tank 4.

Both tanks 4 and 5 are provided with level sensors, and the flow of water and chlorine into the tank 4 is controlled by solenoid valves. All components mentioned thus far are embraced by the prior art. 9 and 10 respectively denote a pump and a solenoid valve, by means of which chlorinated water drawn from the tank 4 can be directed into a distribution circuit 3, and thence by way of solenoid valves 6, 6a, 6b and 6c to various services.

By way of example, the drawing illustrates a set of typical dental surgery apparatus services, namely a spout 2c from which disinfectant is poured into a drinking glass, and two handpieces 2a and 2b. With regard to the handpieces in particular, the liquid from the tank passes through their internal ducts, disinfecting in the process, and is discharged from the attachment end of the instrument.

Liquid can be caused to pass into the handpiece both during surgery, in the event either that it can or that it must be introduced into the mouth of the patient, and following surgery for the purpose of disinfecting the handpiece internally.

Also in the drawing, 1 denotes a further service in the form of a container, accessible from outside by way of at least one opening located preferably in the top. In particular, the container 1 illustrated comprises two sockets 11 and 12 in which to seat handpieces introduced into the container for the purposes of external disinfection. Advantageously, the sockets 11 and 12 might be closed (though not necessarily in a fluid tight fit) by way of a lid fashioned in flexible material, hinged to one side of the container and affording impressions that correspond one with each socket; when the lid is lowered, each impression encompasses the end of the handpiece occupying the corresponding socket.

The container 1 is positioned in the apparatus pedestal in such a way that the handpieces can be introduced without being disconnected from their fluid supply lines.

The liquid disinfectant (chlorinated water) is directed into the container 1 by means of one or more spray nozzle devices.

The container 1 is also in receipt of hot air, supplied at a temperature of 150...200 °C, and preferably 180 °C approx, by a conventional type generator schematically denoted 7.

Thus, the combination of chlorinated water and hot air sprayed and directed respectively into the container 1, creates an environment charged with a disinfecting and sterilizing fluid, in this case chlorine.

Internal disinfection of the handpieces is effected by distributing liquid from the tank 4 through the circuit 3 and into the respective ducts.

To disinfect the handpieces externally, the user places them in the container 1, inside of which the environment is saturated with chlorine; this can be accomplished without disconnecting the handpieces from the apparatus pedestal. The handpieces then remain in the container for a given duration that will depend on the concentration of chlorine in the enclosure and also the level of disinfection, or sterilization, it is wished to achieve.

Thus, in practical terms, it suffices to place the handpieces in the container, positioning each in a respective socket, then lower the lid and wait for a period of time (which may be of greater or less duration) so as to allow the disinfecting action to take place internally of the enclosure. As may be observed, such an operation is especially simple and swift, and can be carried out by the user of the apparatus even several times daily; indeed it would be desirable for both external and internal disinfection to follow every session of treatment. When compared to conventional systems, the system thus described permits of disinfecting handpieces internally and externally in an extremely simple, convenient and swift manner, using an inexpensive, readily available and easy-to-use disinfectant.

In an alternative version of the system illustrated in the drawing, the container 1 might be supplied with disinfectant fluid drawn from a tank separate to that supplying disinfectant to the services; this solution would be adopted in the event that the liquid utilized for external disinfection is unsuitable for spraying into the patient's mouth. At all events, by exploiting the action of hot air to give off chlorine internally of the container 1, it becomes possible to keep the percentage of disinfectant in the mixed fluid comparatively low, and comfortably bearable for the patient.

## Claims

1. A disinfection system, in particular for the handpieces of dental surgery apparatus, comprising
- a container (1), accessible from outside by way of at least one opening through which handpieces (2a, 2b) for disinfection are insertable into the container enclosure, and adapted to be positioned in the dental surgery apparatus pedestal such that the handpieces can be inserted without having to be separated from the pipelines by which they are connected to the apparatus;
- a tank (4) containing disinfectant liquid, from which such liquid is controllably drawn and supplied through a distribution circuit (3) into the handpieces;
characterized
in that it comprises:
at least one spray device supplied controllably with fluid drawn from the tank (4), in order to direct the disinfectant fluid into the container (1) and to disinfect the handpieces externally, and
means by which to generate heat internally of the container.

2. A system as in claim 1, wherein the tank (4) is in receipt of water from the domestic main (8) and isolated therefrom by a barrier of air.

3. A system as in claim 1, wherein means by which to generate heat comprise a hot air generator (7) of which the output is directed into the container (1) at a temperature of between 150 and 200 °C, and the disinfectant fluid is chlorinated water.

4. A system as in claim 1, wherein the uppermost part of the container (1) affords a plurality of sockets (11, 12) covered by a flexible lid embodied with impressions, each located to coincide with a corresponding socket, in which the handpieces are seated when placed into the container.

## Patentansprüche

1. Ein Desinfizierungssystem, speziell geeignet für die Handstücke von zahnmedizinischen Geräten, bestehend aus:
- einem Behälter (1), von außen zugängig mittels mindestens einer Öffnung, durch die die Handstcke (2a, 2b) zur Desinfizierung in den Bereich des Behälters eingeführt werden können; dieser Behälter ist auf solche Art und Weise gestaltet, daß er im Sockel des zahnmedizinischen Gerätes so untergracht werden kann, daß eine Einführung der Handstücke möglich ist, ohne diese von ihren entsprechenden Flüssigkeitsschläuchen, durch die sie mit dem Gerät verbunden sind, zu entfernen;
- einem Tank (4) zur Aufnahme von Desinfizierungsflüssigkeit, die leicht kontrollierbar durch einen entsprechenden Verteilerkreis (3) in die Handstücke geleitet wird;
gekennzeichnet durch folgende Bestandteile:
- mindestens einer Sprayvorrichtung, die kontrollierbar mit der Flüssigkeit aus dem Tank (4) versorgt wird, und dies, um die Desinfizierungsflüssigkeit in den Behälter (1) zwecks äußerlicher Desinfizierung der Handstücke zu leiten;
- Mittel zur Erzeugung von Hitze im Innern des Behälters.

2. Ein System gemäß Anspruch 1, in dem der Tank (4) mit Wasser aus dem normalen Leitungswasserhahn (8) versorgt und von ihm durch eine Luftbarriere getrennt wird.

3. Ein System gemäß Anspruch 1, in dem die Mittel zur Erzeugung von Hitze aus einem Heißluftgenerator (7) bestehen; der entsprechende Auslaß ist in den entsprechenden Behälter (1) bei einer Temperatur zwischen 150 und 200 °C gerichtet und die Desinfizierungsflüssigkeit besteht aus Chlorwasser.

4. Ein System gemäß Anspruch 1, in dem der oberste Teil des Behälters (1) eine Mehrzahl von Fassungen (11, 12) aufweist, welche durch einen Deckel aus flexiblem Material abgedeckt sind und von entsprechenden Abdrücken umschlossen sind, und die so angeordnet sind, daß sie jeweils mit den entsprechenden Fassungen, in welche die Handstücke bei Einführung in den Behälter platziert werden, übereinstimmen.

## Revendications

1. Un système de désinfection, en particulier pour les poignées d'un appareil de chirurgie dentaire comprenant
- un récipient (1) , accessible de l'extérieur au moyen d'une ouverture au moins à travers laquelle les poignées (2a, 2b) pour la désinfection peuvent être insérées à l'intérieur de l'enceinte du récipient, et adapté pour être positionné dans le support de l'appareil de chirurgie dentaire de telle sorte que les poignées puissent être insérées sans qu'on doive les séparer des canalisations par lesquelles elles sont reliées à l'appareil;
- un réservoir (4) contenant un liquide désinfectant, duquel ce liquide est tiré d'une façon contrôlable, et amené à travers un circuit (3) de distribution à l'intérieur des poignées;
caractérisé
en ce fait qu'il comprend:
au moins un dispositif de vaporisation fourni d'une façon contrôlable de fluide tiré d'un réservoir (4), de façon à diriger le fluide désinfectant dans le récipient (1) et à désinfecter les poignées extérieurement, et de moyens par lesquels engendrer de la chaleur à l'intérieur du récipient.

2. Un système comme celui de la revendication 1, dans lequel le réservoir (4) reçoit de l'eau de la canalisation domestique principale (8) et est isolé à partir de là par une barrière d'air.

3. Un système comme celui de la revendication 1, dans lequel les moyens par lesquels la chaleur est engendrée comprennent un générateur d'air chaud (7) duquel le débit est dirigé dans le récipient (1) à une température qui se trouve entre 150 et 200°C, et le fluide désinfectant est de l'eau chlorée.

4. Un système comme celui de la revendication 1, dans lequel la partie la plus haute du récipient (1) présente une pluralité de cavités (11, 12) couvertes par un couvercle flexible fabriqué avec des empreintes, chacune placée pour coïncider avec une cavité correspondante, dans laquelle les poignées sont posées quand elles sont placées dans le récipient.
